# EUROPEAN PATENT APPLICATION

(11) **EP 4 640 521 A1**
(43) Date of publication of application: **29.10.2025**
(21) Application number: 25171759.1
(22) Date of filing: 22.04.2025
(51) Int. Cl.: B62D 5/065, B62D 5/06, B62D 5/32

(54) **ELECTRO-HYDRAULIC STEERING SYSTEM**

(30) Priority: 23.04.2024 IT 202400009232
(71) Applicant: CNH Industrial Italia S.p.A., 10156 Torino (IT)
(72) Inventor: Garramone, Adriano, 10156 Turin (IT); Liberti, Stefano, 10156 Turin (IT); Gravili, Andrea, 10156 Turin (IT)
(74) Representative: CNH Industrial IP Department

(57) **Abstract**

Electro-hydraulic steering system (C) comprising an electric pump (HP) arranged to power a steering device (HSA, SA), processing means (CPU) configured to deactivate said electric pump in response to the deactivation of the steering device and in wherein the system comprises a hydraulic accumulator (HR) operatively connected with said electric pump and with said steering device and wherein said processing means are configured to activate said electric pump in response to the activation of the steering device and when a measured pressure value in said hydraulic accumulator (HR) is lower than a predetermined threshold (TH1).

## Description

### Field of the invention

The present invention concerns a hydraulic control system for controlling the steering of an electric vehicle, in particular of a work vehicle, such as an agricultural or construction vehicle.

The present control system is based on a closed hydraulic circuit.

### State of the art

Conventional hydraulic power steering systems generally include a steering gear having a hydraulic motor powered by a fluid pump that draws hydraulic fluid from a fluid reservoir and is typically driven by the combustion engine or, indirectly, the vehicle's transmission.

The steering wheel is connected to a rotary control valve that directs hydraulic fluid to the hydraulic motor in response to a clockwise or counterclockwise rotation of the steering wheel. The hydraulic motor is operationally connected to the vehicle wheel steering linkages to cause the vehicle wheels to steer.

Some solutions require the hydraulic pump to be electro-actuated, using a dedicated electric motor for steering the wheels. For this reason, the hydraulic pump is named as electric pump.

In work or agricultural vehicles, the steering system is intrinsically safe, as it is based on a gerotor and therefore, in emergency conditions, i.e. in the absence of oil coming from the hydraulic pump, the oil is pumped due to the action of the operator on the steering wheel. Evidently, the effort to operate the steering wheel is significantly increased and steering is significantly slower.

If the electric pump were deactivated when the steering wheel is stationary and activated simultaneously with the detection of a rotation of the steering wheel, the delay in pumping the hydraulic oil would lead to steering operations being carried out, at least initially, in emergency conditions. This is obviously unacceptable because it worsens operator comfort and makes driving the vehicle more risky.

For this reason, today's electro-actuated steering systems plan to keep the electric pump always active and to increase its rotation speed when a sensor detects a change in the steering angle.

Generally, the hydraulic oil pumped by the hydraulic pump is sent to a priority valve which has the task of mainly satisfying the requests of the steering system and forwarding the residual flow to other actuators such as for example an arm or a hydraulic lift, etc..

A work vehicle must minimize electricity consumption; therefore, it is desirable to be able to deactivate the electric motor when no hydraulic oil flow is required and to reactivate it when it is required, without however causing the discomfort and risk situation described above.

Unless specifically excluded in the detailed description that follows, what is described in this chapter is to be considered as an integral part of the detailed description.

### Summary of the invention

The purpose of the present invention is to indicate a hydraulic steering system that allows the electric pump to be deactivated without incurring the problems described above.

The basic idea of the present invention is to implement a hydraulic accumulator capable of providing a flow of hydraulic oil in the initial steering phase so as to allow the deactivation of the electric pump. Furthermore, an electric pump activation logic is provided to serve both the steering system and the recharging of the hydraulic accumulator.

It can preferably be foreseen that processing means are configured to activate the electric pump only when
- the steering device is active or
- a pressure value measured at said hydraulic accumulator is lower than a predetermined threshold.

The dependent claims describe preferred variants of the invention, forming an integral part of the present description.

### Brief description of the figures

Further objects and advantages of the present invention will be clear from the following detailed description of an example of its implementation (and its variants) and from the attached drawings given purely for explanatory and non-limiting purposes, in which:
- Fig. 1 shows an electro-hydraulic diagram exemplifying the present invention;
- Figs. 2 and 3 show examples of flow diagrams illustrating the control logics of the electro-hydraulic scheme of Fig. 1;
- Fig. 4 shows an example of a work vehicle.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

### Detailed description

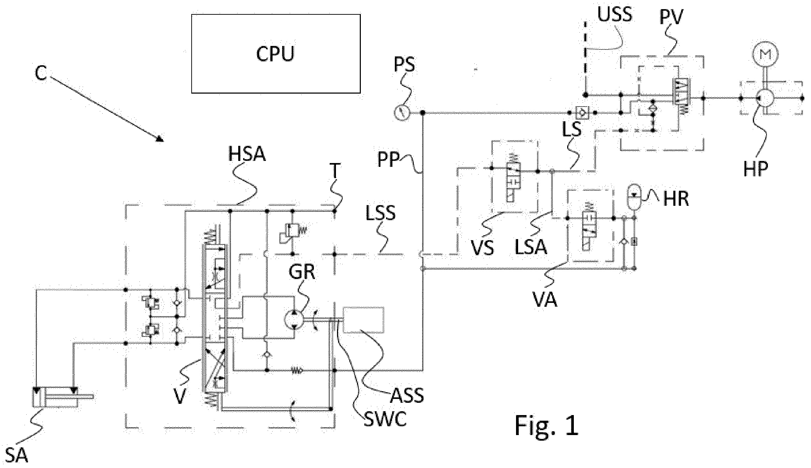

Fig. 1 shows a diagram of an electro-hydraulic steering circuit C modified according to the present invention.

It includes an actuator SA arranged to control the steering linkages (not shown) connected to the wheels of a vehicular axle. The actuator SA is controlled via a portion HSA of the circuit connected to a steering wheel (not shown) housed in a vehicle cabin.

This portion HSA of the circuit may be referred to below as the hydraulic steering device HSA, SA, which is preferably intrinsically safe.

The steering wheel is operationally connected to a so-called "steering column" SWC to which an angular sensor ASS is associated.

The angular sensor is operationally connected to a processing unit CPU, which has the task of controlling the electro-hydraulic circuit and implementing a logic described in detail below.

An electric pump HP, i.e. a pump driven by an electric motor M, is arranged to pressurize the circuit C. The pump is connected to a priority valve PV which, as is known, has the task of serving the device of hydraulic steering HSA, SA with the highest priority. The remaining flow of hydraulic oil is sent to the secondary users USS, which can be an arm, a bucket, a lift, etc...

The line LSS allows to carry out the so-called "load sensing" which permits to control the flow rate of hydraulic oil to be sent to the hydraulic steering device HSA, SA, based on the load, i.e. pressure value, felt by the hydraulic steering device HSA, SA itself.

It can be seen in the diagram that the line LSS crosses the valve VS changing reference sign to LS and reaches the priority valve PV, which has the task of distributing the flow generated by the pump HP.

Well, according to the present invention a hydraulic accumulator HR is connected with the hydraulic line PP, which connects the hydraulic steering device HSA, SA, with the pump HP.

Advantageously, the hydraulic accumulator is arranged to provide flow of hydraulic oil in the activation phases of the hydraulic steering device HSA, SA.

A pressure sensor PS is operationally connected with the hydraulic line PP and with the processing unit CPU.

A valve VA allows to connect the line LS with the hydraulic accumulator HR.

The valve VA operates alternately with the valve VS, in the sense that the load sensing line LS is connected alternatively with the hydraulic steering device HSA, SA, through the line LSS OR with the hydraulic accumulator HR through the line LSA.

According to the present invention, when the steering wheel is stationary, i.e. it is not operated by the operator, the pressure sensor PS allows the pressure of the hydraulic accumulator HR to be measured, so that, if the latter is lower than a first predetermined threshold, then the processing unit is configured to connect the line LS with the hydraulic accumulator HR through the line LSA by closing the valve VS and opening the valve VA and to start the electric pump HP and bring it to a predetermined rotation speed such as to send a flow of oil necessary to recharge the hydraulic accumulator until a second pressure threshold is reached that is greater than the first pressure threshold.

However, when the steering wheel is operated, then the valve VS is commanded to open and, at the same time, the valve VA is commanded to close by the processing unit, as the load sensing is operated to serve the hydraulic steering device HSA, SA, and to start the electric pump HP and bring it to a predetermined rotation speed such as to send a flow of hydraulic oil to the hydraulic steering device HSA, RA.

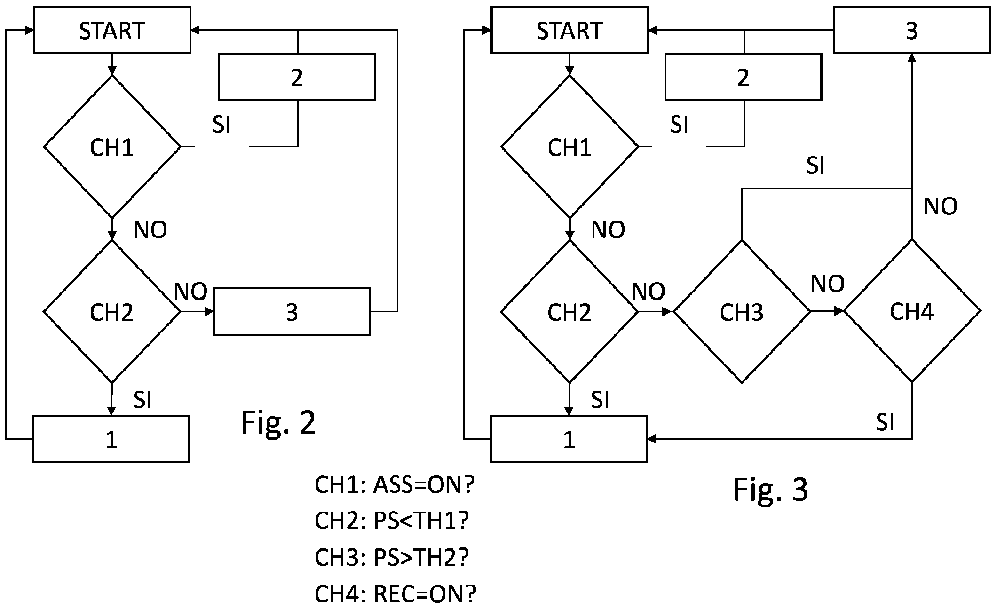

The control logic, according to a variant of the invention, can therefore be summarized as follows with the help of figure 2:
- CH1: if the angular sensor returns that the steering wheel is still ASS=OFF then
- CH2: if the pressure PS is lower than a first predetermined threshold TH1 then
- Step 1: VS=OFF and VA=ON and HP=ON and restart from the beginning, if instead at step CH1 the steering wheel is moving ASS=ON then
- Step 2: VS=ON and VA=OFF and HP=ON, if instead ASS=OFF and the pressure PS is greater than the threshold TH1, then
- Step 3: VS=OFF and VA=ON and HP=OFF.

Evidently, this scheme is created in a cyclical way to monitor any changes in the conditions described above, therefore after the final steps 1, 2 and 3 it always return to the START.

The scheme can be modified to introduce a hysteresis in the charging process of the hydraulic accumulator, with the help of figure 3.

This can be achieved by adding to step 1 the fact of setting the flag REC=ON which represents the charging activation status of the circuit.

The state of the circuit can be
- REC=OFF, in the sense that the electric pump is stopped or is active and powers the device HSA,
- REC=ON, in the sense that the electric pump is active exclusively to recharge the hydraulic accumulator.

In this case, in addition to the checks of the steps CH1, CH2, the state of the circuit is checked: if REC=ON, i.e. it returns that the recharging of the hydraulic accumulator HR is active, then the same state is maintained even if the pressure PS is higher than the first threshold TH1, as long as the pressure PS is lower than a second threshold TH2 greater than TH1.

Therefore, step CH3 has the task of checking whether the pressure PS is higher than the second threshold TH2 and if so, step 3 described above is carried out and then restarts from START, whereas if it is negative, it goes to step CH4 which has the task of checking whether REC=ON and if so, goes to step 1 described above and then starts again from the beginning, however, if not, it goes to step 3 described above and then starts again from the beginning.

Returning to the examination of the circuit in figure 1, it can be noted that the hydraulic accumulator HR is connected to the line PP via a lamination valve in parallel to a check valve.

In this way, the hydraulic accumulator is recharged slowly without excessively burdening the efficiency of the circuit, since, during the operation of the pump HP, the accumulator HR is in parallel with the device HSA, receiving hydraulic flow.

The check valve, however, allows the hydraulic accumulator to quickly supply flow to the device HSA circuit in the early stages of activation of the electric pump, when this is not efficient.

Preferably, the hydraulic accumulator is pre-charged with a gas, for example nitrogen. The pre-charge pressure in the hydraulic accumulator, during the commissioning phase of the circuit C, must always have a value higher than the maximum "steering" pressure of the device HSA. For example, if the steering pressure is 80 bar, then it is advisable that the pre-charge pressure is at least 90 bar. This ensures that the hydraulic accumulator, under steering conditions, behaves as a flow source rather than a user.

It should be understood that the implementation of the hydraulic accumulator has no purpose related to the pressurization of the circuit C, nor it relates to safety issues, as the steering device HSA is intrinsically safe by implementing a gerotor, itself known for this type of applications.

In summary, the present invention shows a hydraulic circuit C which is associated with a hydraulic accumulator and a valve group VA, VS configured to switch between the pressure signal LSA and the signal LSS to be forwarded to the priority valve in relation respectively to the condition of charging activation or the activation of the steering device HSA.

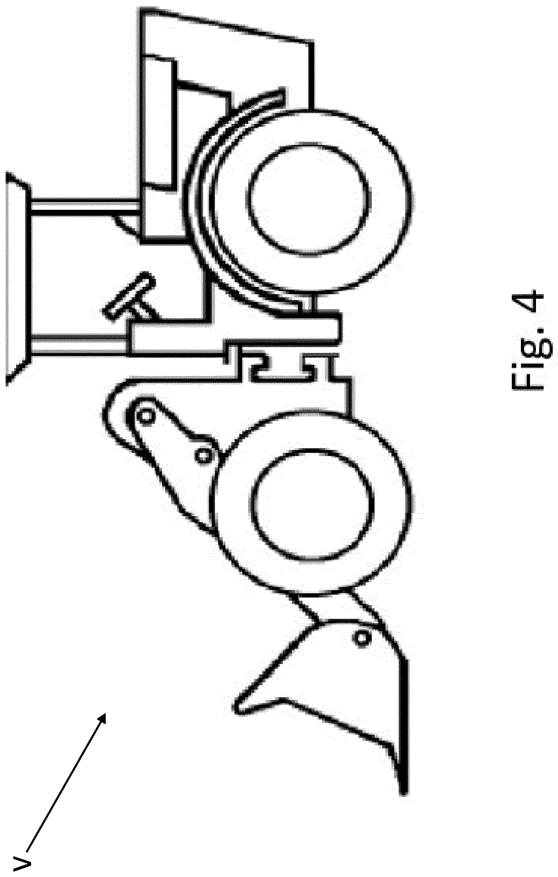

Figure 4 shows an example of a work vehicle implementing the circuit C of Fig. 1 and processing means configured according to the logic of Figs. 2 or 3.

Constructive variations to the non-limiting example described are possible, without departing from the scope of protection of the present invention, including all the equivalent embodiments for a person skilled in the art, to the contents of the claims.

From the above description, the person skilled in the art is able to realize the object of the invention without introducing further construction details.

## Claims

1. Electro-hydraulic steering system (C) comprising an electric pump (HP) arranged to power a steering device (HSA, SA), processing means (CPU) configured to deactivate said electric pump in response to the deactivation of the steering device and in wherein the system comprises a hydraulic accumulator (HR) operatively connected with said electric pump and with said steering device and wherein said processing means are configured to activate said electric pump in response to the activation of the steering device and as long as a measured pressure value in said hydraulic accumulator (HR) is lower than a predetermined threshold (TH1).

2. System according to claim 1, wherein said steering device is intrinsically safe.

3. A system according to claim 1 or 2, wherein said steering device includes a gerotor (GR) arranged to replace said electric pump in the event of malfunction of the electric pump.

4. System according to any of the previous claims 1 - 3, further comprising a sensor (ASS) associated with said steering device for monitoring the activation state of the steering device, operationally connected with said processing means.

5. A system according to any of the preceding claims, further comprising a priority valve (PV) arranged to distribute a flow of oil between said steering device (HSA, SA) and further hydraulic devices.

6. System according to claim 5, further comprising a sensing line (LS, LSS; LS, LSA) arranged to detect a pressure signal associated alternately with the steering device (HSA, SA) and the hydraulic accumulator (HR).

7. The system of claim 6, further comprising a valve assembly (VS, VA) configured to switch between a first pressure signal (LSS) associated with the steering device (HSA, SA) and an associated second pressure signal (LSA) associated to the hydraulic accumulator to control said priority valve.

8. The system of claim 7 wherein said processing means is configured to control said valve assembly to give precedence to said first pressure signal in response to activation of the steering device.

9. System according to any one of the preceding claims, wherein said hydraulic accumulator is connected with said electric pump and with said steering device by means of
- a flow valve arranged to allow the accumulator to be recharged with a specific flow of hydraulic oil,
- a check valve arranged to allow a flow of hydraulic oil from the hydraulic accumulator to the steering device,
the valves being arranged in parallel with each other.

10. System according to any of the previous claims, in which the pre-charge pressure of the hydraulic accumulator, during the commissioning phase of the system, has a value sufficiently higher than a value of a maximum steering pressure of the steering device (HSA , RA).

11. Method of controlling a steering system according to any of the preceding claims 7 - 10, comprising the following steps in cyclic succession:
- (CH1): checking if the angular sensor returns that the steering wheel is stopped (ASS=OFF) then
- (CH2): checking if the pressure (PS) is lower than a first predetermined threshold (TH1) then
- (Step 1): activation of the electric pump (HP=ON) and switching of the valve group (VS=OFF, VA=ON) so as to switch to said second pressure signal (LSA) and returning to the beginning (CH1), if instead the steering wheel is moving (ASS=ON) then
- (Step 2): activation of the electric pump (HP=ON) and switching of the valve group (VS=ON, VA=OFF) so as to switch to said first pressure signal (LSS) and returning to the beginning (START), if instead the steering wheel is still (ASS=OFF) and the pressure value is greater than the first predetermined threshold (TH1), then
- (Step 3): switching off the electric pump (HP=OFF) and switching the valve group to said first pressure signal (VS=OFF, VA=ON).

12. Agricultural or work vehicle comprising a steering axle and a hydraulic steering system according to any of claims 1 - 10.
